## Europäisches Patentamt
## European Patent Office
## Office européen des brevets

(19)

(11) Veröffentlichungsnummer: **0 304 579 B1**

(12) **EUROPÄISCHE PATENTSCHRIFT**

(45) Veröffentlichungstag der Patentschrift: **27.11.91**

(51) Int. Cl.⁵: **B65D 51/16, B60K 15/04**

(21) Anmeldenummer: **88110005.1**

(22) Anmeldetag: **23.06.88**

(54) **Tankstutzen mit Verschraubung von oben.**

(30) Priorität: **07.08.87 DE 8710813 U**

(43) Veröffentlichungstag der Anmeldung:
**01.03.89 Patentblatt 89/09**

(45) Bekanntmachung des Hinweises auf die
Patenterteilung:
**27.11.91 Patentblatt 91/48**

(84) Benannte Vertragsstaaten:
**AT BE CH DE ES FR GB GR IT LI LU NL SE**

(56) Entgegenhaltungen:
**EP-A- 0 210 332**
**FR-A- 2 527 559**
**US-A- 3 159 409**

(73) Patentinhaber: **RHEIN-BONAR KUNSTSTOFF-TECHNIK GMBH**
**Düsseldorfer Strasse 39**
**W-6800 Mannheim 81(DE)**

(72) Erfinder: **Eichelberger, Gerhard**
**Waghäuseler Strasse 24**
**W-6823 Neulussheim(DE)**

(74) Vertreter: **Ratzel, Gerhard, Dr.**
**Seckenheimer Strasse 36a**
**W-6800 Mannheim 1(DE)**

**Beschreibung**

Die Erfindung betrifft einen Tankstutzen mit Verschraubung von oben.

Es sind die verschiedensten Tankstutzen bekannt, die aus einer auf den am Tank befindlichen Stutzen aufsetzbaren Hülse bestehen, die mit einem Tankdeckel verschlossen werden. Die Verbindung zwischen Metallhülse und Stutzen hat sich jedoch bei den bekannten Modellen aufgrund des konstruktiven Aufbaus als ungünstig erwiesen. So werden diese z. B. von seitlich, außen verschraubt. Je nach Standort oder Lage des Tanks ist die Zugänglichkeit an die Verschraubung nicht gewährleistet. Ein weiterer Nachteil erweist sich dadurch, daß eine Verschraubung, deren Kraftrichtung in der Wirkrichtung des Dichtungsmaterials verläuft, deren Dichtkraft beeinflußt. Ein solcher Tankstutzen ist aus der EP-A-0 210 322 bekannt, bei dem eine am Kraftstofftank befestigte Metallhülse mit einem hohlzylindrischen Ansatz des Tanks in einer formschlüssigen Verbindung steht, die mittels eines zwischen Metallhülse und Ansatz eingespannten Dichtrings abgedichtet ist und die Metallhülse seitlich von außen verschraubt ist, so daß nicht immer die Zugänglichkeit der Verschraubung gewährleistet ist und die Dichtkraft des verwendeten Dichtungsmaterials beeinflußt wird, da die Kraftrichtung der Verschraubung in der Wirkrichtung des Dichtungsmaterials verläuft.

Der Erfindung liegt daher die Aufgabe zugrunde, einen Tankstutzen bereitzustellen, dessen Verschraubungstechnik in senkrechter Achse liegt, so daß die Zugänglichkeit jederzeit gewährleistet ist und deren Kraftrichtung der Verschraubung die Dichtung unbeeinflußt läßt.

Diese Aufgabe wird erfindungsgemäß dadurch gelöst, daß bei einem Tankstutzen für Kraftstofftanks mit einer auf den am Tank befindlichen Stutzen aufgesetzten Metallhülse mit einem winkelförmigen, einen Steg aufweisenden und auf dem Stutzen befestigten Innenring, die mit einem Tankdeckel verschließbar und verschraubbar ist (bekannt aus der EP.A.0 210 322) der Steg in den Stutzen eingreift, und der Steg und der Innenring durch eine den Steg am Ring befestigende senkrecht von oben in die Stirnfläche des Stutzens eindringende Befestigungsschraube durchdrungen sind.

Eine weitere besonders bevorzugte Ausführungsform ist dadurch gekennzeichnet, daß die Metallhülse vorzugsweise zylindrisch ausgebildet ist und eine umlaufende Einbuchtung aufweist, in der ein Dichtmittel, vorzugsweise ein O-Ring aufgenommen ist.

Anhand der beigefügten Zeichnung, die in besonders bevorzugtes Ausführungsbeispiel der Erfindung zeigt, wird diese nun näher erläutert.

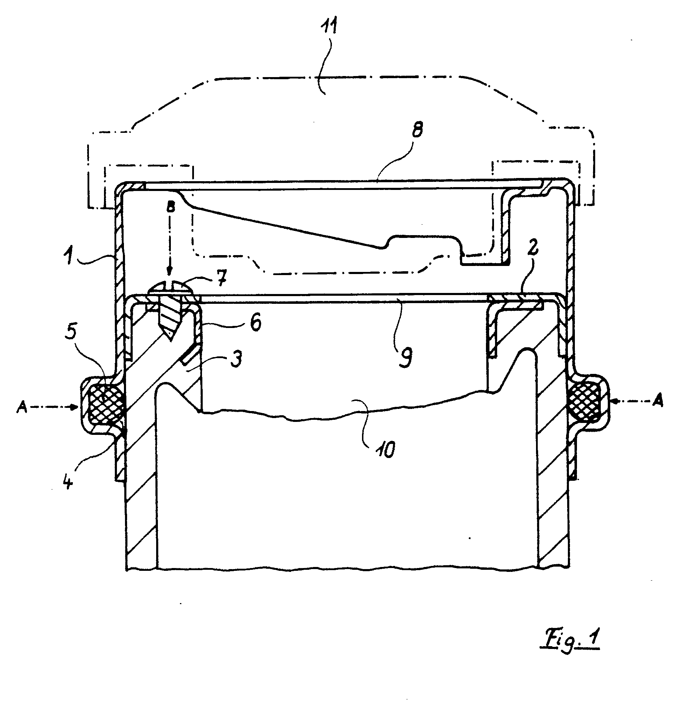

Figur 1    zeigt einen Querschnitt durch den Tankstutzen.

Figur 2    zeigt eine Ausführungsform, bei der der O-Ring in der Schrägzone des Tankstutzens angeordnet ist.

Auf den am Tank befindlichen Stutzen 3 wird die Metallhülse 1 aufgesetzt. Die Metallhülse 1 weist einen abgewinkelten Innenring 2 auf, der auf dem Stutzen 3 aufsitzt und mittels Schrauben 7 von oben befestigt wird. Der angeformte Steg 6 des Innenrings 2 greift in den Stutzen 3 ein und ergibt einen zusätzlichen Halteeffekt. Die Öffnung 8 der Metallhülse 1 weist dabei einen Durchmesser auf, der das Einführen eines Schraubendrehers in senkrechter Achse zur Schraube 7 ermöglicht. Die Öffnung 9 des Innenrings 2 entspricht etwa der Größe der Tanköffnung 10. Die vorzugsweise zylindrisch geformte Metallhülse 1 weist eine umlaufende Ausbuchtung 4 auf, in der das Dichtmittel, vorzugsweise ein O-Ring 5 liegt. Der Tankstutzen wird durch einen Deckel verschlossen.

Die Dichtwirkung A des O-Ringes 5 und der Schraubenachse B stehen senkrecht zueinander und beeinflussen sich nicht, wie bei den bekannten Ausführungsformen, gegenseitig durch gleiche Wirkrichtung.

Es ist leicht einsehbar, daß die Erfindung eine wesentliche Verbesserung aufweist. Der einfache konstruktive Aufbau und die Anordnung der senkrechten von oben zugänglichen Verschraubung beseitigt die bekannten Nachteile.

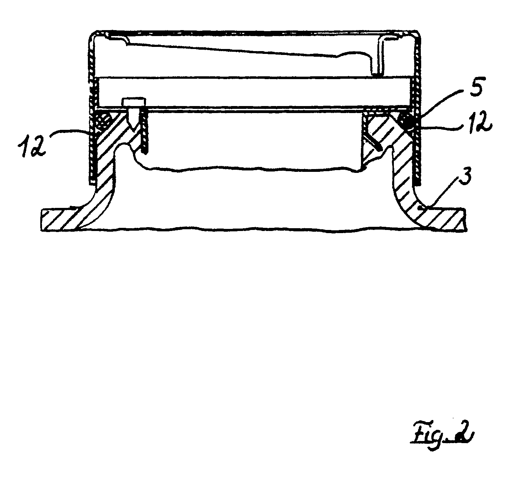

Die beiliegende Figur 2 zeigt eine weitere Ausführungsform, bei der der O-Ring 5 in der Schrägzone 12 des Tankstutzens 3 angeordnet ist.

**Patentansprüche**

1.  Tankstutzen für Kraftstofftanks mit einer auf den am Tank befindlichen Stutzen (3) aufgesetzten Metallhülse (1) mit einem winkelförmigen, einen Steg (6) aufweisenden und auf dem Stutzen befestigten Innenring (2), die mit einem Tankdeckel verschließbar und verschraubbar ist,

    dadurch gekennzeichnet,

    daß der Steg (6) in den Stutzen (3) eingreift, und daß der Steg (6) und der Innenring (2) durch eine den Steg (6) am Ring (2) befestigende senkrecht von oben in die Stirnfläche des Stutzens (3) eindringende Befestigungsschraube (7) durchdrungen sind.

2.  Tankstutzen für Kraftstofftanks nach Anspruch 1,

    dadurch gekennzeichnet,

    daß die Metallhülse (1) vorzugsweise zylindrisch ausgebildet ist und eine umlaufende Einbuchtung (4) aufweist, in der ein Dichtmittel, vorzugsweise ein O-Ring (5) aufgenommen ist.

3. Tankstutzen für Kraftstofftanks nach Anspruch 1 bis 2,
dadurch gekennzeichnet,
daß das Dichtmittel vorzugsweise der O-Ring (5) in einer Schrägzone (12) des Tankstutzens (3) angeordnet ist.

## Claims

1. Tank nozzle for fuel tanks with a metal housing (1) placed on the nozzle (3) arranged on the tank, with an angular inner ring (2) comprising a web (6) and fixed to the nozzle, said housing being lockable with a tank lid and boltable, characterised in that the web (6) engages with the nozzle (3), and that the inner ring (2) is penetrated by a clamping bolt (7) which fixes the web (6) to the ring (2) and penetrates vertically into the front surface of the nozzle (3) from above.

2. Tank nozzle for fuel tanks according to claim 1,
characterized in that the metal housing (1) is preferably cylindrical in shape and comprises a peripheral recess (4) in which a sealing means, preferably an O-ring (5), is accommodated.

3. Tank nozzle for fuel tanks according to claims 1 to 2,
characterised in that the sealing means, preferably the O-ring (5), is arranged in an oblique zone (12) of the tank nozzle (3).

## Revendications

1. Tubulure pour réservoirs de carburant, comportant une enveloppe métallique (1) placée sur la tubulure (3) située sur le réservoir, comprenant une bague intérieure (2) de forme angulaire, présentant une barrette (6) et fixée sur la tubulure, ladite enveloppe (1) pouvant être fermée au moyen d'un couvercle de réservoir et vissée à celui-ci, caractérisée en ce que la barrette (6) s'engage dans la tubulure (3) et que la barrette (6) et la bague intérieure (2) sont traversées par une vis de fixation (7) pénétrant verticalement dans le côté frontal de la tubulure, de haut en bas, et fixant la barrette (6) à la bague (2).

2. Tubulure pour réservoirs de carburant selon la revendication 1, caractérisée en ce que l'enveloppe métallique (1) est, de préférence, de forme cylindrique et présente un renfoncement périphérique (4) qui reçoit un matériau d'étanchéité, de préférence un anneau torique (5).

3. Tubulure pour réservoirs de carburant selon les revendications 1 et 2, caractérisée en ce que le matériau d'étanchéité, de préférence l'anneau torique (5), est disposé dans une zone oblique (12) de la tubulure de réservoir (3).

*Fig. 1*

Fig. 2